# EUROPÄISCHE PATENTSCHRIFT

(11) **EP 2 462 432 B1**
(45) Veröffentlichungstag und Bekanntmachung des Hinweises auf die Patenterteilung: **29.05.2013**
(21) Anmeldenummer: 10725480.7
(22) Anmeldetag: 23.06.2010
(51) Int. Cl.: G01N 27/404, G01N 27/416

(54) **ELEKTROCHEMISCHER SENSOR ZUR MESSUNG DES SAUERSTOFFPARTIALDRUCKS IN EINER PROZESSFLÜSSIGKEIT SOWIE VERFAHREN ZU DESSEN FUNKTIONSPRÜFUNG**
ELECTROCHEMICAL SENSOR FOR MEASURING THE PARTIAL PRESSURE OF OXYGEN IN A PROCESS LIQUID AS WELL AS A METHOD FOR CHECKING THE FUNCTIONING THEREOF
CAPTEUR ÉLECTROCHIMIQUE DESTINÉ À MESURER LA PRESSION PARTIELLE D'OXYGÈNE DANS UN LIQUIDE DE PROCESSUS, AINSI QUE PROCÉDÉ DE CONTRÔLE DE SON FONCTIONNEMENT

(30) Priorität: 04.08.2009 DE 102009036012
(43) Veröffentlichungstag der Anmeldung: 13.06.2012
(73) Patentinhaber: Knick Elektronische Messgeräte GmbH & Co. KG, 14163 Berlin (DE)
(72) Erfinder: WOHLRAB, Heinz, 14167 Berlin (DE); OBERLIN, René, CH-5436 Würenlos (CH)
(74) Vertreter: Rau, Schneck & Hübner
(86) Internationale Anmeldenummer: PCT/EP2010/058915
(87) Internationale Veröffentlichungsnummer: WO 2011/015407

(56) Entgegenhaltungen:
- US-A- 4 518 477
- US-A- 5 098 547

## Beschreibung

Die Erfindung betrifft einen elektrochemischen Sensor zur Messung des Sauerstoffpartialdrucks in einer Prozessflüssigkeit sowie ein Verfahren zur Funktionsüberprüfung eines solchen Sensors.

Zum Hintergrund der Erfindung ist festzuhalten, dass es bei der Messung der Sauerstoffkonzentration in Prozessflüssigkeiten mit elektrochemischen Sensoren erforderlich ist, eine regelmäßige Kontrolle der Funktionstüchtigkeit des Sensors und der gesamten Messeinrichtung vorzunehmen. Insbesondere bei Inertisierungsmessungen, bei der die Sauerstoffkonzentrationen unter einem maximalen Pegel gehalten werden muss, um z.B. eine Entzündung oder Explosion zu vermeiden, ist eine regelmäßige Überwachung der Messeinrichtung zwingend. Als erschwerend kommt hier hinzu, dass elektrochemische Sensoren bei geringer Sauerstoffkonzentration nur einen sehr geringen Messstrom liefern und es damit schwer zu unterscheiden ist, ob der Sensor defekt - also z.B. ein Anschlusskabel unterbrochen ist - oder tatsächlich die Sauerstoffkonzentration in der Prozessflüssigkeit sehr niedrig ist.

Bisher war es üblich, zur Funktionskontrolle den Sensor regelmäßig mit einem Prüfgas, wie z.B. Luft, zu beaufschlagen. Dazu war es erforderlich den Sensor auszubauen oder mit sehr aufwendigen manuellen oder automatischen Apparaturen den Sensor vom Messmedium abzutrennen und mit Prüfgas zu beaufschlagen.

In diesem Zusammenhang ist aus der EP 0 744 620 B1 bzw. der DE 10 2005 028 246 B4 bekannt, elektrochemische Gassensoranordnungen mit Gasgeneratoren auszurüsten, die für die Überprüfung des Sensors selbst in Betrieb genommen werden und ein Prüfgas - in der Regel Sauerstoffin situ erzeugen, womit der Sensor mit dem Prüfgas beaufschlagt und in seiner Funktion überprüft werden kann.

Die US 4 518 477 A offenbart einen elektrochemischen Sauerstoffsensor, der einen mit Elektrolyt gefüllten und mit einer sauerstoffdurchlässigen Membran abgedeckten Sensorkörper, eine Kathode an der Membran, eine die Kathode umgebende, ringförmige Schutzelektrode und eine vom Elektrolyten beaufschlagte Anode im Sensorkörper umfasst. Maßnahmen für eine Funktionsüberprüfung des Sauerstoffsensors sind in dieser Druckschrift nicht offenbart.

Aus der US 5 098 547 A sind Maßnahmen für eine Funktionsüberprüfung eines Sauerstoffsensors bekannt, wobei elektrolytisch generierter Testsauerstoff verwendet wird. Allerdings werden hierfür speziell vorgesehene Elektrolyseelektroden eingesetzt.

Nachteilig bei diesen bekannten Gassensoranordnungen ist die Tatsache, dass eigens für die Prüfgaserzeugung ein Gasgenerator vorhanden sein muss, was einen zusätzlichen apparativen Aufwand bedeutet.

Wie nun durch die im Oberbegriff des Patentanspruches 1 angegebenen Merkmale deutlich wird, weisen bekannte elektrochemische Sensoren zur Messung des Sauerstoffpartialdruckes auf:
- einen elektrolytgefüllten Sensorkörper, der an einer mit der Prozessflüssigkeit beaufschlagten Seite mit einer sauerstoffdurchlässigen Membran abgedeckt ist,
- eine Kathode an der Membran,
- eine die Kathode umgebende, ringförmige Schutzelektrode, die im Messbetrieb auf gleichem Potential wie die Kathode liegt,
- eine vom Elektrolyten beaufschlagte Anode im Sensorkörper, und
- eine vom Elektrolyten beaufschlagte Referenzelektrode im Sensorkörper, wobei zwischen Anode und Kathode eine Spannung anlegbar ist, die zwischen Kathode und Referenzelektrode auf eine konstante Polarisationsspannung regelbar ist (Potentiostat) und der im Messbetrieb zwischen Kathode und Anode fließende Mess-Sensorstrom ein Maß für den Sauerstoffpartialdruck in der Prozessflüssigkeit ist.

Solche Sensoren bestehen also üblicherweise aus einer Drei-Elektrodenanordnung, der erwähnten Kathode, Anode und Referenzelektrode. Die Aufgabe der Anode besteht darin, das Potential der Kathode gegenüber der Referenzelektrode auf einem stabilen Wert, der so genannten Polarisationsspannung, festzuhalten. Die Reduktion des Sauerstoffes an der Kathode bewirkt einen zum Sauerstoffpartialdruck proportionalen Stromfluss von der Kathode zur Anode. Das ganze System ist durch eine sauerstoffdurchlässige Membran bedeckt, um den Austausch des Elektrolyten mit dem Messmedium und andere Verunreinigungen zu verhindern.

Bei Messung niedriger Sauerstoffkonzentrationen wird üblicherweise ein Sensor eingesetzt, bei dem die Kathode mit einem zusätzlichem sogenannten Guardring - dies ist die Schutzelektrode - umschlossen ist, der auf gleichem Potential wie die Kathode liegt und den Restsauerstoff reduziert.

Der Erfindung liegt nun die Aufgabe zugrunde, einen elektrochemischen Sensor der vorstehend erörterten Art so zu verbessern, dass eine Funktionsüberprüfung durch separate Begasung mit Sauerstoff unter Vermeidung eines gesonderten Gasgenerators und des damit verbundenen apparativen Aufwandes realisierbar ist.

Diese Aufgabe wird laut Kennzeichnungsteil des Patentanspruches 1 dadurch gelöst, dass eine in einem Prüfmodus zwischen Kathode und Schutzelektrode schaltbare Testspannungsquelle vorgesehen ist, die Test-Sauerstoff in der Prozessflüssigkeit zwischen Kathode und Schutzelektrode für die Funktionsüberprüfung des Sensors erzeugt.

Die Funktionstüchtigkeitsprüfung des Sensors beruht also auf der kurzzeitigen Umkehrung des polarographischen Prinzips. Legt man zwischen Kathode und Schutzelektrode eine positive Spannung an - wird also der positive Pol der Testspannungsquelle mit der Schutzelektrode verbunden -, so wird bei einem wässrigen Elektrolyten an der Schutzelektrode Sauerstoff durch Oxidation erzeugt. Der so entstandene Sauerstoff wird nach Abschaltung der Spannung an der Kathode reduziert, ein Anstieg des Sensorstroms ist die Folge. Dieser Anstieg des Sensorstromes kann durch ein Messgerät sehr leicht ausgewertet werden.

Mit diesen einfachen Maßnahmen lässt sich eine regelmäßige Überprüfung eines Standardsensors ohne großen apparativen Aufwand durchführen. Ein weiterer Vorteil liegt in der für die Funktionsprüfung nur relativ kurzen Unterbrechung der Messung, da der Sensor nicht ausgebaut werden muss bzw. keine komplizierte Umschaltung zwischen Messmedium und Prüfmedium erfolgen muss.

Gemäß einer weiteren bevorzugten Ausführungsform der Erfindung kann die Schutzelektrode über eine Wechselschaltanordnung wechselweise im Prüfmodus an die Testspannungsquelle oder direkt an die Kathode geschaltet werden. Diese Wechselschaltanordnung ist konstruktiv denkbar einfach aufgebaut und problemlos über eine entsprechende Steuerung in dem erwähnten Messgerät kontrollierbar.

Die Erfindung betrifft ferner einer Verfahren zur Funktionsprüfung eines elektrochemischen Sensors der gattungsgemäßen Art, das folgende Verfahrensschritte aufweist:
- Anlegen einer Testspannung zwischen Kathode und Schutzelektrode in einem Prüfmodus zur Erzeugung von Test-Sauerstoff im Elektrolyten und/oder in der Prozessflüssigkeit zwischen Kathode und Schutzelektrode,
- Abschalten der Testspannung, und
- Auswerten des aufgrund des Testsauerstoffes generierten Prüf-Sensorstromes zur Funktionsanalyse des Sensors.

Die vorstehenden Verfahrensschritte wurden bereits im Zusammenhang mit der entsprechenden Vorrichtung näher erläutert.

Bevorzugte Weiterbildungen dieses Verfahrens sind im Übrigen in den weiteren abhängigen Ansprüchen angegeben. Deren Merkmale, Einzelheiten und Vorteile ergeben sich aus der nachfolgenden Beschreibung eines Ausführungsbeispiels anhand der beigefügten Zeichnungen. Es zeigen:
- Fig. 1: eine schematische Schnittdarstellung eines elektrochemischen Sauerstoff-Sensors mit zusätzlichem Schaltungsdiagramm der Messschaltung und Testspannungsquelle,
- Fig. 2: einen Radialschnitt durch den Sensor entlang der Schnittlinie II-II nach Fig. 1, und
- Fig. 3: ein Flussdiagramm der Funktionsprüfung des Sensors.

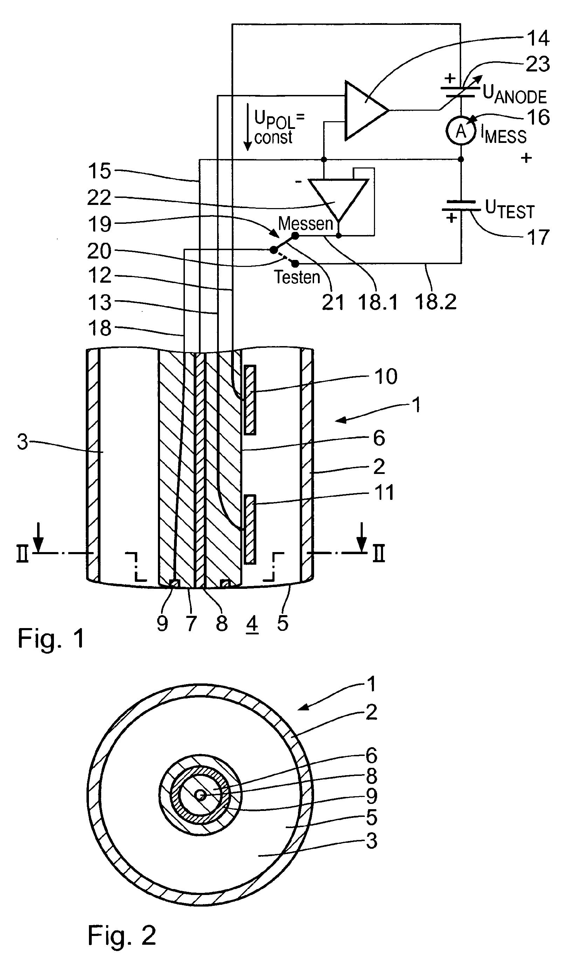

Wie aus den Fig. 1 und 2 deutlich wird, weist ein elektrochemischer Sensor 1 einen rohrförmigen Sensorkörper 2 auf, der mit einem Elektrolyten 3 gefüllt ist. An der im Messbetrieb von einer Prozessflüssigkeit 4 beaufschlagten Seite ist der elektrolytgefüllte Sensorkörper 2 mit einer Membran 5 abgedeckt, die sauerstoffdurchlässig ist, einen sonstigen Austausch zwischen dem Elektrolyten 3 und der Prozessflüssigkeit 4 jedoch unterbindet.

Im Sensorkörper 2 ist axial ein Elektrodenhalter 6 angeordnet, der aus einem isolierenden Material besteht. Daran ist an der Stirnseite 7 zentral eine Kathode 8 ausgebildet, deren Stirnfläche an der Innenseite der Membran 5 anliegt. Konzentrisch um die Kathode 8 liegt eine ringförmige Schutzelektrode 9.

Seitlich sind am Elektrodenhalter 6 innerhalb des Sensorkörpers 2 eine Anode 10 und eine Referenzelektrode 11 angeordnet.

Wie aus dem in Fig. 1 integrierten Schaltungsdiagramm deutlich wird, sind die Anode 10 und Referenzelektrode 11 jeweils über Leitungen 12, 13 an einen Potentiostaten 14 anschließbar, so dass zwischen Kathode 8 und Referenzelektrode 11 die konstante Polarisationsspannung U_{POL} liegt.

Die Kathode 8 wiederum ist über eine Leitung 15, in der eine Messeinheit 16 angeordnet ist, mit dem negativen Pol der Spannungsquelle 23 für die Anodenspannung U_{ANODE} verbunden. Der durch die Messeinheit 16 fließende Mess-Sensorstrom I_{MESS} ist ein Maß für den Sauerstoffpartialdruck in der Prozessflüssigkeit 4.

Zur Überprüfung der Funktionsfähigkeit der Sensoranordnung ist eine Testspannungsquelle 17 vorgesehen, die zwischen die Kathode 8 und Schutzelektrode 9 so eingeschaltet werden kann, dass deren positiver Pol mit der Schutzelektrode 9 über deren Zuleitung 18 verbunden ist. Dabei ist eine Wechselschaltanordnung 19 mit zwei wechselseitig öffnenden und schließenden Schaltern 20, 21 in den Leitungszweigen 18.1, 18.2 zu der Spannungsquelle 17 bzw. zur Leitung 15 der Kathode 8 vorgesehen. In Fig. 1 ist dabei die Messsituation gezeigt, in der die Testspannungsquelle 17 aufgrund des geöffneten Schalters 20 und geschlossenen Schalters 21 abgekoppelt und die Schutzelektrode 9 über einen Impedanzwandler 22 mit der Kathode 8 verbunden ist. Dies stellt den Normalmesszustand dar.

Für die Funktionsüberprüfung wird die Wechselschaltanordnung 19 betätigt, so dass die beiden Schalter 20, 21 ihre Schaltstellung wechseln (gestrichelt dargestellt in Fig. 1) und zwischen Schutzelektrode 9 und Kathode 8 die Testspannung U_{TEST} anliegt. Diese bewirkt eine Sauerstofferzeugung aus dem wässrigen Elektrolyten 3, der nach Abschaltung der Spannung U_{TEST} an der Kathode 8 reduziert wird. Dies hat einen Anstieg des Sensorstromes I_{MESS} zur Folge.

Der Verlauf des Mess-Sensorstroms kann von der beispielsweise in ein nicht näher dargestelltes Messgerät integrierten Messeinheit 16 detektiert und entsprechend ausgewertet werden.

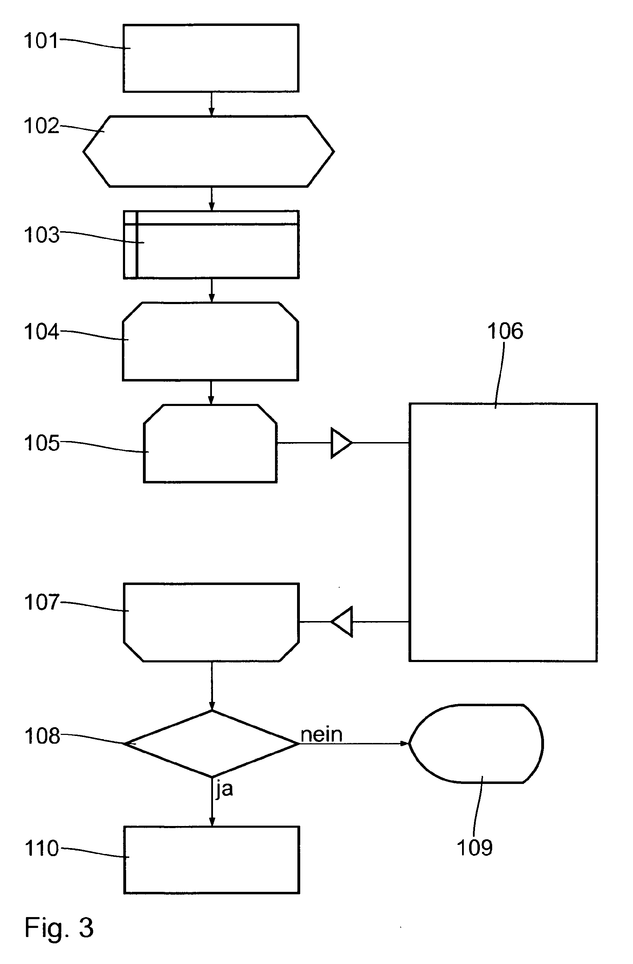

Der Verfahrensablauf bei Durchführung einer entsprechenden Testroutine erschließt sich in diesem Zusammenhang aus Fig. 3. Ausgehend von dem mit Block 101 dargestellten, normalen Sauerstoff-Messbetrieb wird die Funktionsüberprüfung des Sensors 1 durch einen Initialisierungsschritt 102 gestartet. Im Schritt 103 wird der letzte Wert des Mess-Sensorstroms I_{MESS} in einem nicht näher dargestellten Speicher gehalten. Anschließend wird in Schritt 104 die Testspannung U_{TEST} zwischen Kathode 8 und Schutzelektrode 9 angelegt. Der Wert der Testspannung und die Dauer der Potentialanhebung ist dabei sensorspezifisch.

Mit Hilfe der Messeinheit 16 wird anschließend im Schritt 105 nach dem Abschalten der Testspannung der Mess-Sensorstrom I_{MESS} erfasst und - wie durch Block 106 angedeutet - zur Funktionsanalyse des Sensors 1 dahingehend ausgewertet, ob der Mess-Sensorstrom I_{MESS} sich durch den zusätzlichen Sauerstoffeintrag entsprechend erhöht hat.

Aus dem zeitlichen Verlauf des Abklingens des Sensorstroms und einem Vergleich mit dem letzten gespeicherten Wert des Mess-Sensorstroms im Normalmesszustand wird der Zeitpunkt der Wieder-Aktivierung des Messbetriebs berechnet. Die Wieder-Aktivierung erfolgt, wenn der Prüf-Sensorstrom um einen spezifischen Schwellenwert vom gespeicherten Wert des Mess-Sensorstroms I_{MESS} abweicht. Die Bandbreite der Abweichungen kann dabei beispielsweise zwischen 0% und 2% liegen.

Zum so ermittelten Zeitpunkt der Wieder-Aktivierung des Messbetriebs wird die Sensorüberwachung beendet - Schritt 107 - und eine Abfrage 108 aktiviert, ob die Funktionsüberprüfung des Sensors dessen Funktionsfähigkeit ergeben hat. Falls nein, wird eine Warnung und/oder Meldung 109 ausgegeben, dass der Sensor defekt ist. Unter Aspekten der Gerätesicherheit (SIL-Vorschriften) kann nach Detektion eines Funktionsfehlers die Abschaltung der Prozessanlage eingeleitet werden.

Ist eine fehlerfreie Funktion festgestellt worden, wird die Sauerstoffmessung fortgesetzt - Schritt 110.

Das Anlegen der Testspannung zur Sauerstofferzeugung kann im Übrigen im oben erwähnten, nicht näher dargestellten Messgerät mit einfachen Schaltungsmaßnahmen erreicht werden, womit auch im Messgerät selbst auf einfache Weise eine zeitliche Zuordnung zwischen Sauerstofferzeugung und der anschließenden Rückmessung gegeben ist.

## Patentansprüche

1. Elektrochemischer Sensor zur Messung des Sauerstoffpartialdrucks in einer Prozessflüssigkeit, umfassend
- einen elektrolytgefüllten Sensorkörper (2), der an einer mit der Prozessflüssigkeit (4) beaufschlagten Seite mit einer sauerstoffdurchlässigen Membran (5) abgedeckt ist,
- eine Kathode (8) an der Membran (5),
- eine die Kathode (8) umgebende, ringförmige Schutzelektrode (9), die im Messbetrieb auf gleichem Potential wie die Kathode (8) liegt,
- eine vom Elektrolyten (3) beaufschlagte Anode (10) im Sensorkörper (2), und
- eine vom Elektrolyten (3) beaufschlagte Referenzelekrode (11) im Sensorkörper (2), sowie eine Spannungsquelle (23), die eingerichtet ist um im Messbetrieb zwischen Anode (10) und Kathode (8) eine Spannung anzulegen , die zwischen Kathode (8) und Referenzelektrode (11) auf eine konstante Polarisationsspannung (U_{POL}) geregelt wird,
wobei der zwischen Kathode (8) und Anode (10) fließende Mess-Sensorstrom (I_{MESS}) ein Maß für den Sauerstoffpartialdruck in der Prozessflüssigkeit (4) ist,
**gekennzeichnet durch** eine Testspannungsquelle (17), die eingerichtet ist um in einem Prüfmodus zwischen Kathode (8) und Schutzelektrode (9) Test-Sauerstoff im Elektrolyten (3) und/oder in der Prozessflüssigkeit (4) zu erzeugen, für die Funktionsüberprüfung des Sensors.

2. Sensor nach Anspruch 1, **dadurch gekennzeichnet, dass** der positive Pol der Testspannungsquelle (17) mit der Schutzelektrode (9) verbindbar ist.

3. Sensor nach Anspruch 1 oder 2, **dadurch gekennzeichnet, dass** Schutzelektrode (9) über eine Wechselschaltanordnung (19) wechselweise im Prüfmodus an die Testspannungsquelle (17) oder über einen Impedanzwandler (22) an die Kathode (8) schaltbar ist.

4. Verfahren zur Funktionsprüfung eines elektrochemischen Sensors zur Messung des Sauerstoffpartialdrucks in einer Prozessflüssigkeit, welcher Sensor umfasst
- einen elektrolytgefüllten Sensorkörper (2), der an einer mit der Prozessflüssigkeit (3) beaufschlagten Seite mit einer sauerstoffdurchlässigen Membran (5) abgedeckt ist,
- eine Kathode (8) an der Membran (5),
- eine die Kathode (8) umgebende, ringförmige Schutzelektrode (9), die im Messbetrieb auf gleichem Potential wie die Kathode (8) liegt,
- eine vom Elektrolyten (3) beaufschlagte Anode (10) im Sensorkörper (2), und
- eine vom Elektrolyten (3) beaufschlagte Referenzelekrode (11) im Sensorkörper (2), wobei zwischen Anode (10) und Kathode (8) eine Spannung (23) angelegt wird, die zwischen Kathode (8) und Referenzelektrode (11) auf eine konstante Polarisationsspannung (U_{POL}) geregelt wird und wobei der im Messbetrieb zwischen Kathode (8) und Anode (10) fließende Mess-Sensorstrom (I_{MESS}) ein Maß für den Sauerstoffpartialdruck in der Prozessflüssigkeit (4) ist, **gekennzeichnet durch** folgende Verfahrensschritte:
- Anlegen einer Testspannung (U_{TEST}) zwischen Kathode (8) und Schutzelektrode (9) in einem Prüfmodus zur Erzeugung von Test-Sauerstoff im Elektrolyten (3) und/oder in der Prozessflüssigkeit (4) zwischen Kathode (8) und Schutzelektrode (9),
- Abschalten der Testspannung (U_{TEST}),
- Auswerten des aufgrund des Testsauerstoffes generierten Prüf-Sensorstromes (I_{MESS}) zur Funktionsanalyse des Sensors (1).

5. Verfahren nach Anspruch 4, **dadurch gekennzeichnet, dass** der zeitliche Verlauf des Prüf-Sensorstromes (I_{MESS}) im Prüfmodus detektiert wird.

6. Verfahren nach Anspruch 5, **dadurch gekennzeichnet, dass** der Wert des Mess-Sensorstromes (I_{MESS}) vor Aktivierung des Prüfmodus gespeichert wird und die Wieder-Aktivierung des Messbetriebes durch einen Vergleich des Prüf-Sensorstromes (I_{MESS}) mit dem gespeicherten Wert des Mess-Sensorstromes (I_{MESS}) gesteuert wird.

7. Verfahren nach Anspruch 6, **dadurch gekennzeichnet, dass** die Wieder-Aktivierung des Messbetriebes erfolgt, wenn der Prüf-Sensorstrom (I_{MESS}) um einen spezifizierten Schwellenwert vom gespeicherten Wert des Mess-Sensorstroms (I_{MESS}) abweicht.

8. Verfahren nach einem der Ansprüche 4 bis 7, **dadurch gekennzeichnet, dass** bei Abweichung des Prüf-Sensorstromes (I_{MESS}) von einem Sollverhalten eine Warnung erfolgt.

9. Verfahren nach einem der Ansprüche 4 bis 8, **dadurch gekennzeichnet, dass** bei Abweichung des Prüf-Sensorstromes (I_{MESS}) von einem Sollverhalten eine Wieder-Aktivierung des Messbetriebes mit dem Sensor (1) unterbunden wird.

## Claims

1. Electrochemical sensor for measuring the oxygen partial pressure in a process fluid, comprising
- an electrolyte-filled sensor body (2), which is covered on one side charged with the process fluid (4) by an oxygen-permeable membrane (5),
- a cathode (8) on the membrane (5),
- an annular guard electrode (9) surrounding the cathode (8), which in measuring operation lies at the same potential as the cathode (8),
- an anode (10) charged by the electrolyte (3) in the sensor body (2),
and
- a reference electrode (11) charged by the electrolyte (3) in the sensor body (2), as well as a voltage source (23) which is configured to apply a voltage between the anode (10) and cathode (8), which can be controlled between the cathode (8) and reference electrode (11) at a constant polarization voltage (U_{POL}), wherein the measuring sensor current (I_{MESS}) flowing in measuring operation between the cathode (8) and anode (10) is a measure for the oxygen partial pressure in the process fluid (4),
**characterized by**
- a test voltage source (17) which, in a testing mode, is configured to produce test oxygen in the electrolyte (3) and/or in the process fluid (4) between the cathode (8) and guard electrode (9) for testing the function of the sensor.

2. Sensor according to claim 1, **characterized in that** the positive pole of the test voltage source (17) can be connected to the guard electrode (9).

3. Sensor according to claim 1 or 2, **characterized in that** the guard electrode (9) can be switched by a change-over switch arrangement (19) alternately in the testing mode to the test voltage source (17) or by an impedance converter (22) to the cathode (8).

4. Method for checking the function of an electrochemical sensor for measuring the oxygen partial pressure in a process fluid, which sensor comprises
- an electrolyte-filled sensor body (2), which is covered on one side charged with the process fluid (3) by an oxygen-permeable membrane (5),
- a cathode (8) on the membrane (5),
- an annular guard electrode (9) surrounding the cathode (8), which in measuring operation lies at the same potential as the cathode (8),
- an anode (10) charged by the electrolyte (3) in the sensor body (2),
and
- a reference electrode (11) charged by the electrolyte (3) in the sensor body (2), wherein between the anode (10) and cathode (8) a voltage (23) is applied, which is controlled between the cathode (8) and reference electrode (11) at a constant polarization voltage (U_{POL}) and wherein the measuring sensor current (I_{MESS}) flowing in measuring operation between the cathode (8) and anode (10) is a measure of the oxygen partial pressure in the process fluid (4),
**characterized by** the following method steps:
- applying a test voltage (U_{TEST}) between the cathode (8) and guard electrode (9) in a testing mode for producing test oxygen in the electrolyte (3) and/or in the process fluid (4) between the cathode (8) and guard electrode (9),
- switching off the test voltage (U_{TEST}),
- evaluating the test sensor current (I_{MESS}) generated by the test oxygen for the function analysis of the sensor (1).

5. Method according to claim 4, **characterized in that** the time sequence of the testing sensor current (I_{MESS}) is detected in the testing mode.

6. Method according to claim 5, **characterized in that** the value of the measuring sensor current (I_{MESS}) is saved prior to activating the testing mode and the reactivation of the measuring operation is controlled by a comparison of the test sensor current (I_{MESS}) with the saved value of the measuring sensor current (I_{MESS}).

7. Method according to claim 6, **characterized in that** the measuring operation is reactivated if the test sensor current (I_{MESS}) deviates by a specific threshold amount from a saved value of the measuring sensor current (I_{MESS}).

8. Method according to one of claims 4 to 7, **characterized in that** in case of a deviation of the test sensor current (I_{MESS}) from a specified behavior a warning is issued.

9. Method according to one of claims 4 to 8, **characterized in that** in case of a deviation of the test sensor current (I_{MESS}) from a specified behavior a reactivation of the measuring operation by the sensor (1) is prevented.

## Revendications

1. Capteur électrochimique destiné à la mesure de la pression partielle d'oxygène dans un liquide de processus, comprenant
- un corps de capteur (2) rempli d'électrolyte qui est recouvert avec une membrane (5) perméable à l'oxygène sur une face alimentée par le liquide de processus (4),
- une cathode (8) sur la membrane (5),
- une électrode de protection (9), annulaire, entourant la cathode (8), qui est au même potentiel que la cathode (8) pendant le fonctionnement de la mesure,
- une électrode de référence (11) alimentée d'électrolytes (3) dans le corps de capteur (2), ainsi qu'une source de tension (23) qui est prévue pour, pendant le fonctionnement de la mesure entre l'anode (10) et la cathode (8), appliquer une tension qui est régulée entre la cathode (8) et l'électrode de référence (11) à une tension de polarisation (U_{POL}) constante, le courant passant par le capteur de mesure (I_{MESS}) entre la cathode et l'anode (10) étant une mesure de la pression partielle d'oxygène dans le liquide de processus (4),
**caractérisé par** une source de tension de test (17) qui est prévue pour engendrer de l'oxygène de test dans les électrolytes (3) et/ou dans le liquide de processus (4) dans un mode d'examen entre la cathode (8) et l'électrode de protection (9) pour le contrôle du fonctionnement du capteur.

2. Capteur selon la revendication 1 **caractérisé en ce que** le pôle positif de la source de tension de test (17) peut être relié avec l'électrode de protection (9).

3. Capteur selon les revendications 1 ou 2 **caractérisé en ce que** l'électrode de protection (9) peut être connectée de manière interchangeable à la source de tension de test (17) par l'intermédiaire d'un ensemble de connexion variable (19) dans le mode test ou à cathode (8) par l'intermédiaire d'un transformateur d'impédance (22).

4. Procédé pour le contrôle du fonctionnement d'un capteur électrochimique pour la mesure de la pression partielle d'oxygène dans un liquide de processus, lequel capteur comprend
- un corps de capteur (2) rempli d'électrolyte qui est recouvert sur l'une des faces alimentée par le liquide de processus (3) par une membrane (5) perméable à l'oxygène,
- une cathode (8) sur la membrane (5),
- une électrode de protection (9), de forme annulaire, entourant la cathode (8) qui est au même potentiel que la cathode (8) pendant le fonctionnement de la mesure,
- une anode (10) alimentée en électrolyte (3) dans le corps de capteur (2), et
- une électrode de référence (11) alimentée en électrolyte (3) dans le corps de capteur (2), une tension (23) étant appliquée entre l'anode (10) et la cathode (8), qui est régulée sur une valeur de tension de polarisation (U_{POL}) constante entre la cathode (8) et l'électrode de référence (11), et le courant (I_{MESS}) traversant le capteur de mesure entre la cathode (8) et l'anode (10) est une mesure pour la pression partielle d'oxygène dans le liquide de processus (4),
**caractérisé par** les étapes de procédé suivantes :
- application d'une tension de test (U_{TEST}) entre la cathode (8) et l'électrode de protection (9) dans un mode test pour engendrer de l'oxygène de test dans l'électrolyte (3) et/ou dans le liquide de processus (4) entre la cathode (8) et l'électrode de protection (9),
- coupure de la tension de test (U_{TEST}),
- évaluation du courant (I_{MESS}) du capteur de test généré en raison de l'oxygène de test pour l'analyse de fonctionnement du capteur (1).

5. Procédé selon la revendication 4 **caractérisé en ce que** l'écoulement dans le temps du courant (I_{MESS}) du capteur de test est détecté en mode de test.

6. Procédé selon la revendication 5 **caractérisé en ce que** la valeur du courant (I_{MESS}) du capteur de mesure est enregistrée avant l'activation du mode test et que la nouvelle activation du fonctionnement de mesure est commandée par une comparaison du courant (I_{MESS}) du capteur test avec la valeur enregistrée du courant (I_{MESS}) du capteur de mesure.

7. Procédé selon la revendication 6 **caractérisé en ce que** la nouvelle activation du fonctionnement de la mesure se produit lorsque le courant (I_{MESS}) du capteur de mesure dévie d'une valeur seuil spécifique de la valeur du courant (I_{MESS}) du capteur de mesure enregistrée.

8. Procédé selon l'une des revendications de 4 à 8 **caractérisé en ce que,** lorsque la déviation du courant (I_{MESS}) du capteur de mesure a lieu en partant d'une valeur théorique, il y a un avertissement.

9. Procédé selon l'une des revendications de 4 à 8 **caractérisé en ce que,** lors de la déviation du courant (I_{MESS}) du capteur de mesure à partir d'un comportement souhaité, il faut effectuer une nouvelle activation du fonctionnement de mesure avec le capteur (1).
